**Europäisches Patentamt**

**European Patent Office**

**Office européen des brevets**

(19)

(11) Numéro de publication : **0 138 707 B1**

(12) **FASCICULE DE BREVET EUROPÉEN**

(45) Date de publication du fascicule du brevet :
**20.01.88**

(51) Int. Cl.⁴ : **F 28 D 15/00**

(21) Numéro de dépôt : **84402034.7**

(22) Date de dépôt : **10.10.84**

(54) Machine perfectionnée de chauffage d'un article ou produit par condensation de vapeur sur celui-ci.

(30) Priorité : **11.10.83 FR 8316113**

(43) Date de publication de la demande :
**24.04.85 Bulletin 85/17**

(45) Mention de la délivrance du brevet :
**20.01.88 Bulletin 88/03**

(84) Etats contractants désignés :
**AT BE CH DE FR GB IT LI LU NL SE**

(56) Documents cités :
**EP-A- 0 023 107**
**BE-A- 851 734**
**FR-A- 2 243 045**
**US-A- 4 055 217**
**US-A- 4 115 601**

(73) Titulaire : **PIEZO-CERAM ELECTRONIQUE**
**Le Péage Route de Grasse**
**F-06600 - Antibes (FR)**

(72) Inventeur : **Pescatore, Richard**
**13, Avenue de la Velmasque**
**F-06600 Antibes (FR)**
Inventeur : **Boumendil, Jean-Jack**
**Les Hortensias No. 15 Les Hameaux du Soleil**
**F-06270 Villeneuve Loubet (FR)**

(74) Mandataire : **de Boisse, Louis et al**
**CABINET DE BOISSE 37, Avenue Franklin D. Roosevelt**
**F-75008 Paris (FR)**

EP 0 138 707 B1

## Description

L'invention concerne une machine perfectionnée de chauffage d'un article ou produit par condensation de vapeur sur celui-ci.

On connaît par le brevet français 2 243 045, une machine pour chauffer un article à une température élevée, par exemple en vue de le soumettre à des opérations de soudure ou brasure, par condensation de vapeur d'un liquide à haut point d'ébullition sur celui-ci, qui comprend une enceinte ouverte à l'atmosphère et propre à contenir un liquide primaire ayant un point d'ébullition qui soit au moins égal à ladite température élevée ; des moyens de chauffage proches de l'extrémité inférieure de l'enceinte et propres à mettre en ébullition le liquide primaire pour produire de la vapeur primaire, des moyens de condensation primaires à une première hauteur au-dessus du fond de l'enceinte et propres à condenser la vapeur primaire en liquide primaire à la première hauteur ; des moyens collecteurs de condensat primaires associés aux moyens de condensation primaires et propres à collecter la vapeur primaire condensée qui en provient ; un premier conduit faisant communiquer les moyens collecteurs de condensat primaires et la partie inférieure de l'enceinte et propre à transporter de la vapeur primaire condensée des moyens collecteurs de condensat primaires vers la partie inférieure de l'enceinte ; des moyens pour établir une masse de vapeur secondaire dans l'enceinte au-dessus de la vapeur primaire ; des moyens de condensation secondaires à une seconde hauteur au-dessus de la première hauteur et propres à condenser la vapeur secondaire en liquide secondaire à la seconde hauteur, des moyens collecteurs de condensat secondaires associés aux moyens de condensation secondaires et propres à recueillir la vapeur condensée secondaire qui provient de ceux-ci ; et un second conduit assurant une communication entre les moyens collecteurs de condensat secondaires et les moyens collecteurs de condensat primaires, et propres à transporter la vapeur secondaire condensée des moyens collecteurs de condensat secondaires aux moyens collecteurs de condensat primaires.

Dans cette machine antérieure, la chambre de travail située juste au-dessus du liquide primaire est remplie d'un mélange de vapeurs primaire et secondaire de points d'ébullition différents ce qui fait que la température de travail n'est pas régulière, pouvant varier localement ou dans le temps. Par ailleurs, la machine antérieure ne permet pas de maîtriser de façon entièrement satisfaisante, le problème de la réduction des fuites de liquide primaire vers l'atmosphère, car les serpentins de refroidissement utilisés pour condenser les vapeurs n'ont pas une efficacité totale en raison des turbulences qui règnent dans l'enceinte par suite du mélange des vapeurs primaire et secondaire.

Il existe donc un besoin pour une machine améliorée.

L'invention se propose donc de fournir une machine de chauffage du type « en ligne » d'un article ou produit par condensation de vapeur sur celui-ci, qui, du fait de sa conception originale, permet notamment :

de supprimer les variations thermiques inhérentes aux machines actuellement disponibles sur le marché en évitant ou minimisant au maximum le mélange de vapeur des liquides primaire et secondaire dans l'enceinte de chauffage des articles ;

de minimiser les fuites de vapeur primaire dans l'atmosphère grâce à un système de condensation de cette vapeur plus efficace que ceux préconisés jusqu'à présent ;

de contrôler le cycle thermique avec précision ;

d'employer des mélanges de liquides à points d'ébullition différents ;

facultativement, de nettoyer avec le maximum d'efficacité, le produit ou l'article après un traitement.

L'invention concerne une machine du type « en ligne » pour chauffer des articles ou produits à une température élevée par condensation de vapeur sur ceux-ci, qui comprend :

- un tunnel avant une entrée et une sortie,

- des moyens pour déplacer les articles ou produits à chauffer de cette entrée à cette sortie, et, dans l'ordre,

- une première, une deuxième, une.troisième, une quatrième et une cinquième chambres ayant une section transversale plus grande que celle du tunnel, étant réparties le long du tunnel, étant distantes les unes des autres et étant reliées les unes aux autres par des tronçons dudit tunnel,

la troisième chambre étant. adaptée à être essentiellement remplie de vapeurs d'un liquide primaire ayant un point d'ébullition au moins égal à la température élevée à laquelle les articles ou produits doivent être chauffés,

la deuxième et la quatrième chambres étant pourvues de moyens pour y établir une masse de vapeurs d'un liquide secondaire ayant un point d'ébullition moindre que celui du liquide primaire de façon à condenser toutes vapeurs primaires provenant de la troisième chambre,

la première et la cinquième chambres étant munies de moyens de refroidissement pour condenser toutes vapeurs secondaires provenant des deuxième et quatrième chambres, respectivement, et

- des moyens de chauffage propres à porter à l'ébullition un liquide primaire dans un bouilleur alimentant la troisième chambre en vapeurs du liquide primaire,

- des moyens pour recueillir les condensats de vapeurs primaires formés dans les deuxième et quatrième chambres et pour les recycler au bouilleur, et

- des moyens pour recueillir les condensats de vapeurs secondaires formés dans les première et cinquième chambres et pour les recycler aux moyens d'établissement de la masse de vapeurs secondaires, lesdits moyens d'établissement étant distincts des moyens de chauffage du liquide primaire.

Le fait que les différentes chambres de la machine de l'invention soient distantes les unes des autres et ne communiquent entre elles que par des tronçons de tunnel de section réduite évite ou minimise fortement les mélanges de vapeurs ainsi que les fuites de vapeur dans l'atmosphère, ce qui est un facteur positif de régularité et d'économie de fonctionnement.

Facultativement, mais de préférence, la machine comprend en outre, des moyens de lavage prévus au-delà des moyens de condensation secondaires et permettant de laver les pièces ou produits traités avant ou à leur sortie de la machine, pendant qu'ils sont encore chauds, ce qui facilite notablement leur lavage et économise de l'énergie.

De préférence également, la machine comprend des moyens de contrôle de la température d'ébullition du liquide primaire, coopérant avec des moyens permettant l'introduction dans le bouilleur, lorsque cela s'avère nécessaire, d'un complément du constituant le plus volatil du liquide primaire, lorsque celui-ci est constitué d'un mélange de deux constituants à points d'ébullition différents, afin de corriger toute variation excessive du point d'ébullition du mélange.

La description qui va suivre, faite en regard des dessins annexés, fera bien comprendre l'invention.

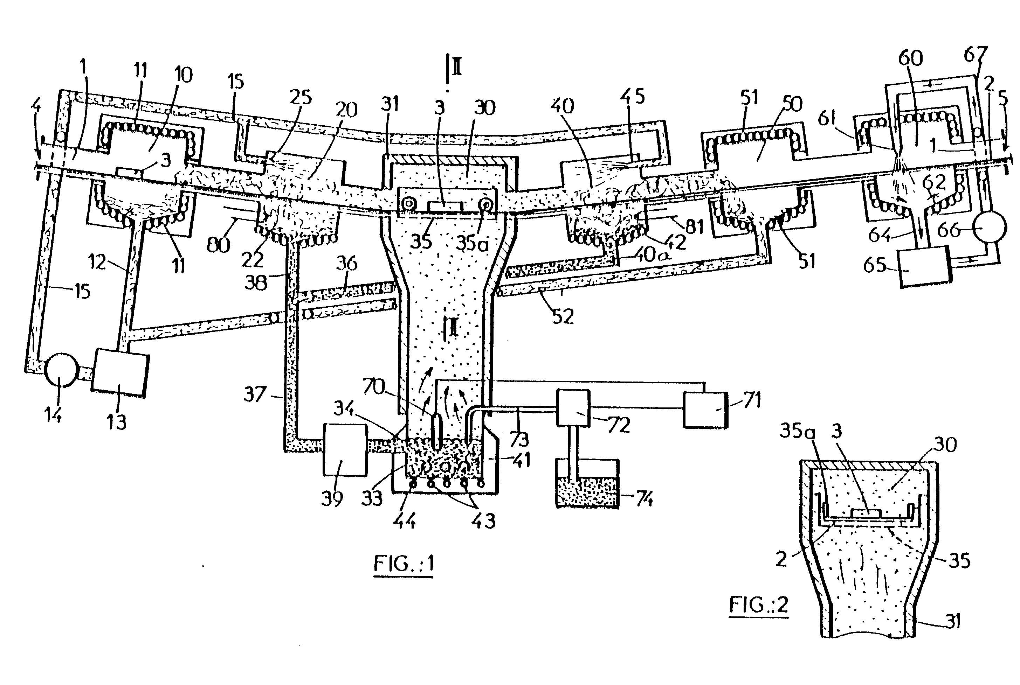

La figure 1 est une vue schématique, en coupe longitudinale, illustrant un mode de réalisation de l'invention. La figure 2 est une vue en coupe transversale partielle selon la ligne II-II de la figure 2 montrant un détail de réalisation.

Sur la figure 1 est représentée une machine selon l'invention du type dit « en ligne ».

Cette machine comprend un tunnel 1 parcouru par une grille transporteuse sans fin 2, par exemple en acier inoxydable. Le long du tunnel sont réparties six chambres 10, 20, 30, 40, 50 et 60 espacées. La grille 2 sert à convoyer les articles ou produits 3 à chauffer dans la machine et est entraînée par un moteur à vitesse variable (non représenté). Les articles ou produits entrent en 4 (entrée) et sortent en 5 (sortie).

Au voisinage de la partie médiane du tunnel se trouve la chambre de chauffage 30. De part et d'autre de la chambre 30 se trouvent des chambres 20 et 40 de vaporisation du liquide secondaire et de condensation complémentaire de la vapeur primaire. En amont de la chambre 20 et en aval de la chambre 40, se trouvent des chambres 10 et 50 de condensation de la vapeur secondaire. En aval de la chambre 50, se trouve la chambre de lavage 60.

La grille 2 suit un trajet rectiligne légèrement descendant (angle d'environ 7° avec l'horizontale) depuis l'entrée de la machine jusqu'à la chambre 30, un trajet rectiligne horizontal dans la chambre 30, et un trajet rectiligne légèrement ascendant de la sortie de la chambre 30 jusqu'à la sortie de la machine. Le tunnel 1 présente un profil analogue. Ceci contribue à maintenir les vapeurs denses de liquide primaire dans la chambre 30 et à réduire leur propension à envahir les chambres adjacentes 20 et 40 remplies de vapeurs de liquide secondaire moins denses.

La chambre de chauffage 30 comprend un calorifugeage 31 sur la plus grande partie de sa surface sauf à sa partie inférieure qui constitue un bouilleur 33 contenant le liquide primaire 34. Dans la chambre 30, la grille 2 passe sur un guide 35 constitué d'une tôle perforée à profil en U sur laquelle sont prévus des galets 35a assurant l'horizontalité de la grille dans la chambre 30. Le guide 35 est suspendu dans la chambre 30 par des pattes de fixation et est espacé des parois de la chambre de façon à laisser le libre passage aux vapeurs de liquide primaire.

Le chauffage du bouilleur est assuré, d'une part, par un bain-marie constitué d'un fluide caloporteur 41 dans lequel sont immergés des éléments chauffants 43, et, d'autre part, par des éléments chauffants 44 immergés directement dans le liquide primaire, ces derniers n'étant mis en action que dans le cas d'une demande importante en vapeur primaire, par exemple lorsqu'une grosse charge d'articles ou de produits sont à traiter.

Les chambres 20 et 40 qui flanquent la chambre 30 comportent d'une part, à leur partie inférieure, des éléments chauffants 22, 42 respectivement, contribuant à assurer la vaporisation de la vapeur secondaire, et, d'autre part, à leur partie supérieure des injecteurs de liquide secondaires 25 et 45, respectivement, constitués chacun d'une buse pulvérisatrice, la température des éléments 22 et 42 étant toutefois inférieure au point d'ébullition du liquide primaire afin de contribuer à condenser la vapeur primaire parvenant aux chambres 20 et 40. Les parties inférieures des chambres 20 et 40 présentent un profil en V et sont reliées au bouilleur par les conduits 38 et 37 (chambre 20) ou par les conduits 40a, 36 et 37 (chambre 40). Un filtre 39 est prévu sur le conduit 37 en amont du bouilleur afin d'éliminer les particules solides provenant des articles ou produits traités et ayant pu être entraînées par la vapeur primaire condensée.

Les chambres de condensation 10 et 50 sont énergiquement refroidies par des éléments réfrigérants 11 et 51, respectivement, constitués par un réseau de tubes parcourus par un fluide frigorifique sous pression. En variante, on pourrait utiliser une double enveloppe parcourue par une circulation d'eau. Les parties inférieures des chambres 10 et 50 présentent un profil en V et sont reliées par des tubes 12 et 52, respectivement, à un régénérateur 13 du liquide secondaire, constitué lui-même d'un dispositif de lavage à l'eau et d'un filtre, destiné à régénérer le condensat de liquide secondaire. A la sortie du régénérateur, une pompe 14 renvoie le liquide secondaire, par le conduit 15, vers les injecteurs 25 et 45.

La chambre 60 est la chambre de lavage des articles ou produits traités. Cette chambre est équipée, à la partie supérieure, d'une buse 61 orientée vers la grille 2 et d'une cuve 62 de recueil du liquide de lavage. La cuve 62 est reliée par le conduit 64 à un régénérateur 85 du liquide de lavage, à la sortie duquel une pompe 66 renvoie le liquide régénéré, par le conduit 67, vers la buse 61. Le régénérateur 65 est lui-même constitué d'un dispositif de lavage du liquide de lavage usé, d'un filtre et, éventuellement, d'un dispositif de distillation.

Les chambres 20 et 40 sont pourvues, en outre, au voisinage de leur partie inférieure, de sondes thermométriques 80 et 81, respectivement, qui régulent le fonctionnement des éléments 22 et 42, respectivement, pour éviter que la température de ceux-ci ne chute en-dessous du point d'ébullition du liquide secondaire.

Le fonctionnement de la machine de l'invention est le suivant :

On commence par mettre sous tension les éléments chauffants 42 du bouilleur de façon à porter le liquide primaire à l'ébullition, puis on met en route la pompe 14 et, si un lavage est désiré, la pompe 66.

La vapeur primaire, venant du bouilleur 33, monte le long de la chambre 30 et arrive à sa partie supérieure, enveloppant les articles à chauffer qui se trouvent dans la chambre 30 et venant à leur contact de tous côtés. De la vapeur primaire se condense sur les articles, tels que 3, traversant la chambre 30 et les porte rapidement à la température d'ébullition de ladite vapeur en leur cédant sa chaleur latente de vaporisation. La vapeur ainsi condensée, s'écoule à travers les perforations du guide 35 et retombe dans le bouilleur. Une partie de la vapeur primaire, toutefois, s'échappe de la chambre 30, s'engage dans le tunnel 1 et arrive dans les chambres 20 et 40 où elle se condense aussitôt au contact de la masse de liquide et/ou de vapeur secondaire régnant dans ces chambres. Les condensats primaires formés dans les chambres 20 et 40 retournent par les conduits 38, 37 et 40a, 36, 37, respectivement, au bouilleur après filtration en 39. En effet, du liquide secondaire est injecté par pulvérisation par les injecteurs 25 et 45 à la partie supérieure des chambres 20 et 40, respectivement. Ce liquide secondaire, qui aura typiquement un point d'ébullition relativement bas, typiquement de moins de 50°C, se vaporise sous l'action conjugée du contact avec la vapeur primaire dont la température est plus élevée, typiquement de l'ordre de 50-300°C, et des éléments chauffants 22 et 42, lesquels sont chauffés à une température supérieure au point d'ébullition du liquide secondaire mais inférieure à celui du liquide primaire. De la sorte, la vapeur secondaire joue le rôle d'un bouchon pour la vapeur primaire, l'empêchant d'envahir les zones du tunnel s'étendant en amont de la chambre 20 et en aval de la chambre 40. Egalement, la vapeur secondaire dissout et entraîne les composés de dégradation toxiques, comme les polyfluoro-isobutylènes, qui pourraient résulter d'une dégradation thermique partielle du liquide primaire. Les vapeurs secondaires produites dans les chambres 20 et 40 arrivent dans les chambres 10 et 50, respectivement, où elles sont condensées sous l'action des éléments réfrigérants 11 et 51, respectivement, et collectées à la partie inférieure desdites chambres. De là, les condensats secondaires sont envoyés, via les conduits 12 et 52, à un régénérateur 13 où ils sont lavés et filtrés. A la sortie du régénérateur 13, une pompe 14 recycle le liquide secondaire régénéré vers les injecteurs 25 et 45, par l'intermédiaire du conduit 15.

Les articles ou produits placés sur la grille transporteuse 2, entrent dans le tunnel en 4, sont préchauffés par la vapeur secondaire dans la chambre 20, puis passent dans la chambre 30 où ils sont rapidement chauffés à une température correspondant au point d'ébullition du liquide primaire utilisé. Ensuite, les articles ou produits sont refroidis par suite de leur passage dans les chambres 40 et 50 à une température habituellement située dans la gamme de 50-100 °C. On peut finalement les soumettre à un lavage dans la chambre 60, si désiré. On a trouvé qu'un lavage effectué en série avec le traitement thermique dans la machine, lorsque les articles ou produits sont encore chauds, est beaucoup plus efficace qu'un lavage similaire par ailleurs effectué ultérieurement dans une étape séparée. Le fluide de lavage peut être constitué de tout solvant approprié, tel que l'eau, des solvants chlorés, etc...

En jouant sur le choix des liquides primaire et secondaire et en réglant, de manière appropriée, la vitesse de la grille transporteuse, on peut obtenir toute courbe de température souhaitée, à savoir :

une vitesse de montée en température contrôlée ;

une durée de traitement précise à la température désirée ;

une vitesse de refroidissement contrôlée.

La machine de l'invention autorise, enfin, l'emploi de mélanges de deux liquides primaires de points d'ébullition différents lorsqu'on désire traiter des articles ou produits à une température intermédiaire entre lesdits points d'ébullition. Comme dans un tel cas le mélange de liquides primaires tend normalement à s'appauvrir en constituant primaire le plus volatil, il est prévu, selon l'invention, une sonde thermométrique 70 immergée dans le bain de liquide primaire et reliée à un dispositif de régulation 71 à seuil de température réglable. Lorsque la température du bain de liquide primaire dépasse le seuil de température choisi par suite de l'appauvrissement en constituant primaire le plus volatil, le dispositif de régulation 71 commande l'actionnement d'une pompe doseuse 72 injectant dans le bouilleur, par le conduit 73, une quantité complémentaire prédéterminée réglable du constituant liquide primaire le plus volatil, prélevée dans un réservoir 74 contenant une réserve de ce constituant le plus volatil.

Comme liquides primaires, on utilise habituellement des composés perfluorocarbures inertes. Des liquides primaires utiles disponibles dans le commerce sont notamment les produits de la marque déposée Fluorinert (vendus par la Société 3M) dont les points d'ébullition vont, selon les types, de 56 °C à 215 °C, et de la marque déposée Galden (vendus par la Société Ausimont S.p.A. du groupe Montedison) dont les points d'ébullition sont compris dans les gammes 218-228 °C (Galden LS) et 255-272 °C (Galden HS).

Comme liquides secondaires, on utilise habituellement des composés chlorofluorocarbures. Des liquides secondaires utiles disponibles dans le commerce sont notamment les produits vendus sous la marque déposée Flugene par la Société Chloe Chimie, comme le Flugene 113 dont le point d'ébullition est voisin de 47 °C, ou sous la marque déposée FREON 1 13 vendue par la Société E. I. du Pont de Nemours and Company, dont le point d'ébullition est aussi voisin de 47°C.

L'invention, grâce au système de contrôle et d'injection d'un appoint de constituant de liquide primaire rend possible l'utilisation d'un mélange de liquides primaires lorsqu'on désire obtenir une température de traitement intermédiaire entre les points d'ébullition de deux liquides primaires.

La machine de l'invention, grâce à ses équipements perfectionnés, permet en outre :

une absence totale d'air dans la machine ;

une faible consommation (pertes) de liquide primaire ;

un fonctionnement garantissant la sécurité du personnel (élimination dans les condensats secondaires des composés toxiques comme les polyfluoroisobutylènes, provenant d'une dégradation thermique du liquide primaire).

Tous les perfectionnements apportés permettent de considérer la machine de l'invention comme un instrument universel de chauffage pour des applications thermiques telles que la fusion d'un produit, le séchage, la polymérisation et le traitement thermique dans une gamme de températures allant de 50 à 300°C environ, la limite supérieure de température n'étant limitée que par le manque actuel de liquide primaire inerte à point d'ébullition dépassant 300°C. Des applications particulières sont le brasage, le soudage par refusion, la polymérisation de résines ou monomères organiques thermodurcissables, par exemple de résines époxy, en vue par exemple, de réaliser une encapsulation ou un collage, etc...

## Revendications

1. Une machine du type « en ligne » pour chauffer des articles ou produits à une température élevée par condensation de vapeur sur ceux-ci, qui comprend :

- un tunnel (1) ayant une entrée et une sortie,
- des moyens (2) pour déplacer les articles ou produits à chauffer de cette entrée à cette sortie, et, dans l'ordre,
- une première, une deuxième, une troisième, une quatrième et une cinquième chambres (10, 20, 30, 40, 50) ayant une section transversale plus grande que celle du tunnel, étant réparties le long du tunnel, étant distantes les unes des autres et étant reliées les unes aux autres par des tronçons dudit tunnel,

la troisième chambre étant adaptée à être essentiellement remplie de vapeurs d'un liquide primaire ayant un point d'ébullition au moins égal à la température élevée à laquelle les articles ou produits doivent être chauffés,

la deuxième et la quatrième chambres étant pourvues de moyens (14, 15, 25, 45) pour y établir une masse de vapeurs d'un liquide secondaire ayant un point d'ébullition moindre que celui du liquide primaire de façon à condenser toutes vapeurs primaires provenant de la troisième chambre,

la première et la cinquième chambres étant munies de moyens (11, 51) de refroidissement pour condenser toutes vapeurs secondaires provenant des deuxième et quatrième chambres, respectivement, et

- des moyens de chauffage (41, 43, 44) propres à porter à l'ébullition un liquide primaire dans un bouilleur alimentant la troisième chambre en vapeurs du liquide primaire,
- des moyens (36, 38, 40) pour recueillir les condensats de vapeurs primaires formés dans les deuxième et quatrième chambres et pour les recycler au bouilleur, et
- des moyens (12, 52) pour recueillir les condensats de vapeurs secondaires formés dans les première et cinquième chambres et pour les recycler aux moyens d'établissement de la masse de vapeurs secondaires, lesdits moyens d'établissement étant distincts des moyens de chauffage du liquide primaire.

2. Une machine selon la revendication 1, caractérisée en ce qu'elle comprend, en outre, une sixième chambre (60) de lavage équipée de moyens de lavage (64, 65, 66, 67) et permettant de laver les pièces ou produits traités avant ou à leur sortie de la machine, pendant qu'ils sont encore chauds.

3. Une machine selon la revendication 1 ou 2, caractérisée en ce qu'elle comprend, en outre, des moyens de contrôle (70, 71) de la température d'ébullition du liquide primaire, coopérant avec des moyens (72, 73, 74) permettant l'introduction dans le bouilleur, lorsque cela s'avère nécessaire, d'un complément du constituant le plus volatil du liquide primaire, lorsque celui-ci est constitué d'un mélange de deux constituants à points d'ébullition différents, afin de corriger toute variation excessive du point d'ébullition du mélange.

4. Une machine selon l'une quelconque des revendications 1 à 3, caractérisée en ce que les moyens de déplacement (2) de l'article suivent un trajet descendant depuis l'entrée du tunnel jusqu'à l'entrée de la chambre de chauffage (30), un trajet horizontal dans la chambre (30), et un trajet ascendant de la sortie de la chambre (30) à la sortie du tunnel, ce dernier ayant un profil analogue.

5. Une machine selon l'une quelconque des revendications 1 à 4, caractérisée en ce que la chambre de chauffage (30) communique à sa partie inférieure avec un bouilleur (33) et en ce que les moyens de déplacement (2) passent, dans la chambre (30) tout en étant espacés des parois de la chambre, de façon que la vapeur primaire provenant du bouilleur enveloppe les articles à chauffer, les contactant tant par en dessous que par au-dessus.

## Claims

1. A machine of the in-line type for heating articles or products at an elevated temperature by condensing vapour thereon, which comprises :
   - a tunnel (1) having an entry and an exit,
   - means (2) for moving articles or products to be heated from said entry to said exit, and in this order,
   - first, second, third, fourth, and fifth chambers (10, 20, 30, 40, 50) having a cross-section greater than that of said tunnel, being distributed along said tunnel, being at a distance from each other and being connected to each other by sections of said tunnel,

said third chamber being adapted to be filled with vapours of a primary liquid having a boiling point which is at least equal to the elevated temperature at which said articles or products have to be heated,

said second and fourth chambers being provided with means (14, 15, 25, 45) for establishing therein a body of vapours of a secondary liquid having a boiling point lower than that of said primary liquid so as to condense any primary vapours coming from said third chamber,

said first and fifth chambers being provided with cooling means (11, 51) for condensing any secondary vapours coming from said second and fourth chambers, respectively, and
   - heating means (41, 43, 44) for boiling a primary liquid in a boiler feeding said third chamber with said vapours of primary liquid ;
   - means (36, 38, 40) for collecting the condensates of primary vapours formed in said second and fourth chambers and for recycling them to said boiler, and
   - means (12, 52) for collecting the condensates of secondary vapours formed in said first and fifth chambers and for recycling them to said means for establishing the body of secondary vapours, said establishing means being distinct from said means for heating the primary liquid.

2. A machine according to claim 1, characterized in that it additionally comprises a sixth chamber (60) for washing, equipped with washing means (64, 65, 66, 67) and permitting to wash the treated components or products before or as they leave the machine, while they are still hot.

3. A machine as claimed in claim 1 or 2, characterized in that it additionally comprises means (70, 71) for controlling the boiling temperature of the primary liquid, cooperating with means (72, 73, 74) permitting to add into the boiler, when this is found necessary, a complementary portion of the more volatile component of the primary liquid, when the latter consists of a mixture of two components with different boiling points, in order to correct any excessive change in the boiling point of the mixture.

4. A machine according to any of claims 1 to 3, characterized in that the means (2) for moving the article follow a descending path from the entrance of the tunnel to the entrance of said third heating chamber (30), a horizontal path in said third chamber (30), and an ascending path from the exit of said third chamber (30) to the exit of the tunnel, said tunnel having a similar profile.

5. A machine according to any of claims 1 to 4, characterized in that the heating chamber (30) communicates in its lower part with a boiler (33) and in that said means (2) for moving pass through said third chamber (30) while being spaced from the walls of the chamber so that the primary vapour originating from said boiler envelops the articles to be heated, contacting them both from below and from above.

## Patentansprüche

1. Eine Maschine vom Typ « Reihenbetrieb » zum Erwärmen von Gegenständen bzw. Produkten auf eine höhere Temperatur durch Dampfkondensation an ihnen, mit :
   - einem Tunnel (1), der einen Einlaß und einen Auslaß hat,
   - Mitteln (2) zum Fördern der zu erwärmenden Gegenstände bzw. Produkte von diesem Einlaß zu diesem Auslaß, und, in dieser Reihenfolge,
   - einer ersten, einer zweiten, einer dritten, einer vierten und einer fünften Kammer (10, 20, 30, 40, 50), die einen größeren Querschnitt als der Tunnel haben, entlang des Tunnels verteilt sind, einen Abstand voneinander haben und untereinander durch Abschnitte des Tunnels verbunden sind,

wobei die dritte Kammer im wesentlichen füllbar ist mit Dampf einer Primärflüssigkeit, die einen Siedepunkt hat, der mindestens gleich der Temperatur ist, auf die die Gegenstände bzw. Produkte erwärmt werden sollen,

wobei die zweite und vierte Kammer versehen sind mit Mitteln (14, 15, 25, 45) zum Erzeugen einer Dampfmasse einer Sekundärflüssigkeit, die einen Siedepunkt hat, der kleiner ist als der der Primärflüssigkeit, derart, daß der von der dritten Kammer kommende gesamte Primärdampf kondensiert wird,

wobei die erste und vierte Kammer versehen sind mit Kühlmitteln (11, 51) zum Kondensieren des von der zweiten bzw. vierten Kammer kommenden gesamten Sekundärdampfes, und
   - Heizmitteln (41, 43, 44), die eine Primärflüssigkeit in einem Siedekessel zum Sieden bringt, welcher die dritte Kammer mit Dampf der Primärflüssigkeit versorgt,
   - Mitteln (38, 38, 40) zur Aufnahme des in der zweiten und vierten Kammer gebildeten Kondensats des Primärdampfes und zum Zurückführen desselben zum Siedekessel, und

- Mitteln (12, 52) zur Aufnahme des in der ersten und fünften Kammer gebildeten Kondensats des Sekundärdampfes und zum Zurückführen desselben zu den Mitteln zum Erzeugen der Sekundärdampfmasse, wobei diese Erzeugungsmittel von den Mitteln zum Erwärmen der Primärflüssigkeit getrennt sind.

2. Eine Maschine nach Anspruch 1, dadurch gekennzeichnet, daß sie ferner eine sechste Kammer (60) zum Waschen aufweist, welche mit Waschmitteln (64, 65, 66, 67) versehen ist und ein Waschen der behandelten Gegenstände bzw. Produkte vor oder bei ihrem Austritt aus der Maschine erlauben, während sie noch heiß sind.

3. Eine Maschine nach Anspruch 1 oder 2, dadurch gekennzeichnet, daß sie ferner Mittel (70, 71) zum Regeln der Siedetemperatur der Primärflüssigkeit aufweist, welche mit Mitteln (72, 73, 74) zusammenwirken, die die Möglichkeit bieten, eine Ergänzung des flüchtigsten Bestandteils der Primärflüssigkeit, falls sich dies als erforderlich erweist, in den Siedekessel einzuführen, wenn die Primärflüssigkeit von einem Gemisch aus zwei Bestandteilen unterschiedlicher Siedepunkte gebildet wird, um jegliche zu große Änderung des Siedepunktes des Gemisches zu korrigieren.

4. Eine Maschine nach einem der Ansprüche 1 bis 3, dadurch gekennzeichnet, daß die Mittel (2) zum Fördern des Gegenstandes einer Bahn folgen, die vom Einlaß des Tunnels bis zum Einlaß der Heizkammer (30) abwärts verläuft, einer horizontalen Bahn in der Kammer (30) und einer Bahn, die von dem Auslaß der Kammer (30) zu dem Auslaß des Tunnels aufwärts verläuft, wobei der letztere ein entsprechendes Profil hat.

5. Eine Maschine nach einem der Ansprüche 1 bis 4, dadurch gekennzeichnet, daß die Heizkammer (30) an ihrem unteren Abschnitt mit einem Siedekessel (33) in Verbindung steht und daß die Fördermittel (2) in die Kammer (30) hinein mit Abstand zu den Wänden der Kammer derart verlaufen, daß der von dem Siedekessel kommende Primärdampf die zu erwärmenden Gegenstände umhüllt und mit ihnen sowohl von unten wie auch von oben in Berührung steht.

FIG.:1

FIG.:2

0 138 707